# EUROPEAN PATENT SPECIFICATION

(11) **EP 2 182 324 B1**
(45) Date of publication and mention of the grant of the patent: **27.01.2016**
(21) Application number: 08019299.0
(22) Date of filing: 04.11.2008
(51) Int. Cl.: G01C 22/00, B62J 3/00

(54) **Bicycle meter assembly with positioning function**
Fahrradcomputeranordnung mit Standortbestimmungsfunktion
Ensemble de compteur de bicyclette avec fonction de positionnement

(43) Date of publication of application: 05.05.2010
(73) Proprietor: Chen, Yi-Lun, Taipei City 110 (TW)
(72) Inventor: Chen, Yi-Lun, Taipei City Taiwan 110 (TW); Weng, Wen-Pin, Jhonghe City Taipei County Taiwan 235 (TW)
(74) Representative: Dufay, Nicolas Henri

(56) References cited:
- EP-A- 1 568 584
- DE-A1- 19 832 078
- DE-A1-102004 043 177

## Description

### FIELD OF THE INVENTION

The present invention relates to a bicycle meter assembly, and more particularly to a bicycle meter assembly that displays traveling information when the bicycle is moving and provides a positioning function when the bicycle is parked at some place.

### BACKGROUND OF THE INVENTION

With the increasing fuel price, more and more people living in the modem society choose not to drive a car or ride a motorcycle so frequently, so as to achieve the purpose of saving money and energy and reducing carbon. Riding bicycle and taking public transportation are two alternatives for driving cars and riding motorcycles. Particularly, the bicycle is not only a convenient traffic means, but also an ideal exercise apparatus. Therefore, various types of bicycle meters for sensing a bicycle's traveling information and a rider's body signals have been developed.

Most of the currently available bicycle meters include a sensor installed near a wheel or a braking device of the bicycle. By multiplying a given wheel size by the number of turns of the wheel, a user can know the distance by which the bicycle has moved.

Taiwan Patent Publication No. M327829 discloses an integrated control device for mounting on a bicycle having at least one lamp. The integrated bicycle control device includes a keypad, a microprocessor, a wireless transceiver, and a display unit. The microprocessor is electrically connected to the keypad for receiving signals generated by pressing the keys of the keypad and sending out a driving signal accordingly. The driving signal is then transmitted by the wireless transceiver to another wireless transceiver mounted on the lamp of the bicycle for controlling the on/off of the lamp. The display unit is electrically connected to the microprocessor for displaying the on/off state of the lamp on the bicycle.

Generally, a car or a motorcycle has a burglarproof device integrated with a remotely control lock. Since a relatively high amount of current is consumed by such a burglarproof lock, a relatively large battery is required to supply sufficient electric current. However, the large battery for the burglarproof lock would occupy a quite large room on a bicycle and increase an overall weight of the bicycle. US Patent No. 6,690,267 discloses a remotely controllable bicycle lock and alarm system, which includes a remote control device and an integrated lock and alarm device. The remote control device is operated by a user to generate a remote control signal to the integrated lock and alarm device. At this point, the integrated lock and alarm device automatically locks the bicycle to provide the antitheft function. In the event the bicycle is touched by someone else, the integrated lock and alarm device will emit a warning sound to notify the user.

The integrated bicycle control device disclosed in Taiwan Patent Publication No. M327829 is designed only to control and display the on/off state of the bicycle lamp, and the remotely controllable bicycle lock and alarm system disclosed in US Patent No. 6,690,267 is designed only to protect the bicycle against theft. Both of the two inventions do not provide other sensing functions. Therefore, a user has to expense additional money to purchase other sensing devices for mounting on the bicycle to achieve other required sensing functions.

EP 1568584 A1 discloses an onboard computer-integrated lighting, signalling and position locating device for bicycles comprising two elements positioned on the front and rear areas of the bicycle.

DE 10 2004 043 177 A1 discloses an arrangement comprising a mobile telephone for use in locating a parked vehicle.

### SUMMARY OF THE INVENTION

A primary object of the present invention is to provide a bicycle meter assembly with positioning function, so that traveling information of a bicycle and a user's body signals can be sensed and displayed on a sensor module when the user rides the bicycle.

Another object of the present invention is to provide a bicycle meter assembly with positioning function, so that a bicycle parked at a certain spot can be quickly located by pressing a bicycle positioning button on a sensor module carried by a user to generate a call signal for a receiver module installed on the unicycle to emit a warning signal.

To achieve the above and other objects, the bicycle meter assembly with positioning function according to the present invention includes a sensor module and a receiver module. The sensor module includes a microprocessor, a sensing unit, a display unit, a keypad, an encoder, and a wireless transceiver. The receiver module includes a wireless receiver, a decoder, and a warning unit. The sensor module and the receiver module are separately installed on a bicycle at two selected positions. The sensing unit of the sensor module senses a set of traveling information when the bicycle is moving. The sensed traveling information is then displayed on the display unit via the microprocessor.

When the user wants to locate the bicycle being parked at a selected spot, the keypad of the sensor module can be pressed to generate a bicycle positioning signal, which is encoded by the encoder to produce a call signal. The encoded call signal is sent by the microprocessor to the wireless transceiver and transmitted to the receiver module.

The call signal received by the wireless receiver of the receiver module is decoded by the decoder into a trigger signal for triggering the warning unit to emit a warning signal.

With the technical means adopted by the present invention, traveling information of the bicycle being ridden by the user can be sensed by the sensing unit and displayed on the display unit. Therefore, the user can know the riding speed, the riding distance, and the riding time at any time while riding the bicycle.

Since the bicycle meter assembly of the present invention also provides the positioning function, the user can quickly locate the bicycle being parked at some place, particularly when the bicycle is parked at a crowded region, such as in a campus or near a bus/train station or a rapid transport station. That is, with the present invention, the user can quickly locate his or her bicycle in a crowded environment without consuming a lot of time.

Moreover, since the present invention integrates a sensor and a locating device into one unit, the user can save the money that is otherwise needed to purchase an additional locating device.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a perspective view of a bicycle meter assembly of the present invention;
Fig. 2 is a block diagram showing the internal circuit design of a bicycle meter assembly according to a first embodiment of the present invention;
Fig. 3 schematically shows a first example of application of the bicycle meter assembly of the present invention;
Fig. 4 shows a sensor module of the bicycle meter assembly of the present invention for displaying different traveling information and body signals thereon;
Fig. 5 schematically shows a second example of application of the bicycle meter assembly of the present invention; and
Fig. 6 is a block diagram showing the internal circuit design of a bicycle meter assembly according to a second embodiment of the present invention.

### DETAILED DESCRIPTION OF THE PREFERRED EMBODIMENTS

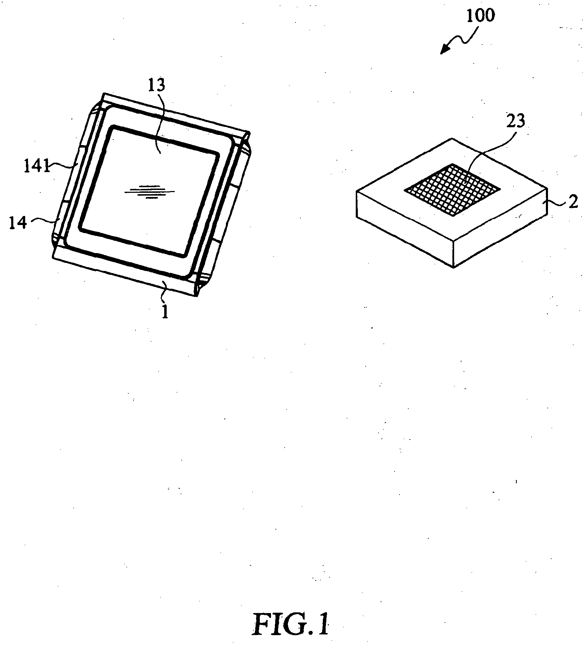

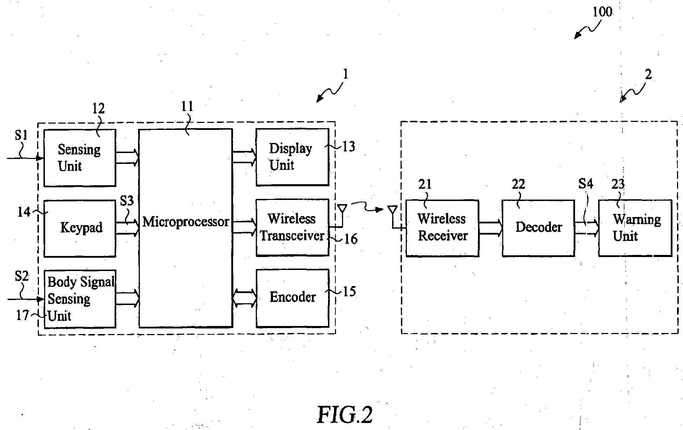

Please refer to Fig. 1 that is a perspective view showing a bicycle meter assembly 100 of the present invention having a sensor module 1 and a receiver module 2, and to Fig. 2 that is a block diagram showing the internal circuit design for the sensor module 1 and the receiver module 2 of a bicycle meter assembly 100 according to a first embodiment of the present invention.

As shown, in the bicycle meter assembly 100 according to the first embodiment of the present invention, the sensor module 1 includes a microprocessor 11, a sensing unit 12, a display unit 13, a keypad 14, an encoder 15, a wireless transceiver 16, and a body signal sensing unit 17. The sensing unit 12 is used to sense a set of traveling information S1 of a bicycle on which the bicycle meter assembly 100 is installed. The microprocessor 11 retrieves the sensed traveling information S1 and sends the same to the display unit 13 for displaying.

The keypad 14 of the sensor module 1 includes a bicycle positioning button 141. When the bicycle positioning button 141 is pressed, a call signal S3 is generated. The encoder 15 encodes the call signal S3 generated by the bicycle positioning button 141, and sends the encoded call signal S3 to the microprocessor 11. The wireless transceiver 16 transmits the encoded call signal S3 to the receiver module 2. The body signal sensing unit 17 is used to sense a set of body signals S2 of a user riding the bicycle having the bicycle meter assembly 100 of the present invention installed thereon, and the sensed body signals S2 are forwarded by the microprocessor 11 to the display unit 13 for displaying.

The receiver module 2 includes a wireless receiver 21, a decoder 22, and a warning unit 23. The receiver 21 of the receiver module 2 is used to receive the call signal S3 transmitted by the sensor module 1. The call signal S3 received by the wireless receiver 21 is sent to the decoder 22 and decoded. The warning unit 23 is used to emit a warning signal. In the first embodiment of the present invention, the warning unit 23 can be a buzzer or an indicator lamp.

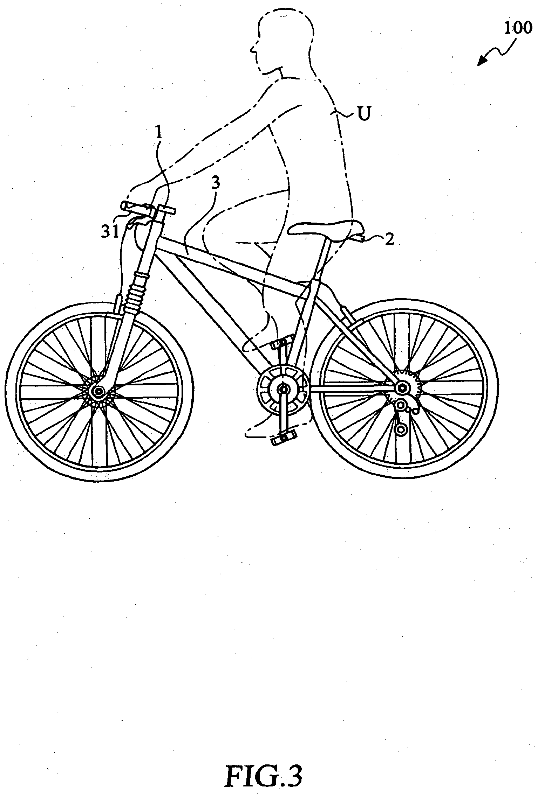

Fig. 3 schematically shows a first example of application of the bicycle meter assembly 100 according to the first embodiment of the present invention. The sensor module 1 and the receiver module 2 of the bicycle meter assembly 100 are separately installed on a bicycle 3 at two selected positions. In the illustrated embodiment, the sensor module 1 is installed on a handlebar 31 of the bicycle 3 near a middle area thereof, and the receiver module 2 is installed on a lower rear end of a saddle of the bicycle 3. Alternatively, the sensor module 1 and the receiver module 2 can be installed at other suitable positions on the bicycle 3 by a user U according to actual need.

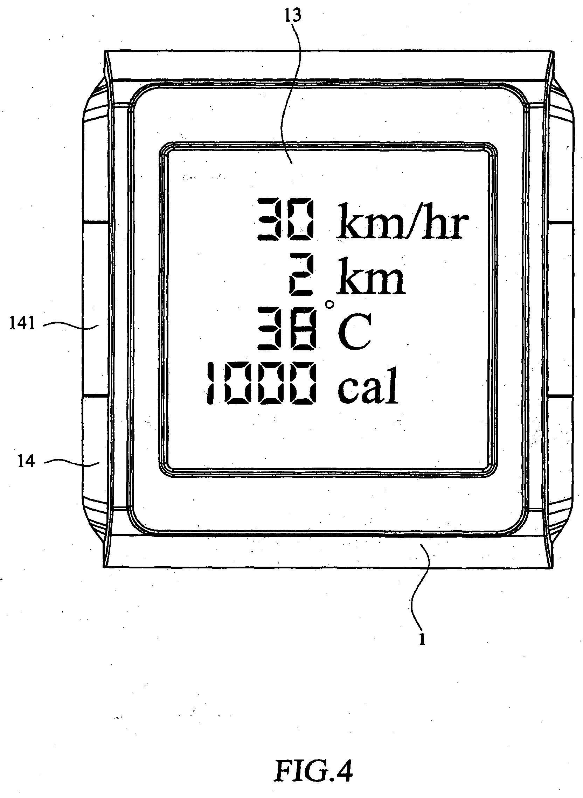

Please refer to Figs. 2, 3, and 4 at the same time. When the user U rides the bicycle 3, the sensor module 1 installed on a middle area of the handlebar is adapted to sense a set of traveling information S1 from the bicycle 3. The set of traveling information S1 varies with the user's riding speed. Meanwhile, the body signal sensing unit 17 is adapted to sense a set of body signals S2 generated by the user U while riding the bicycle 3. The set of traveling information S1 can include speed information, distance information, and time information. And, the body signals S2 can include one or both of a body temperature signal and a calorie consumption signal.

As can be seen from Fig. 2, when the sensing unit 12 and the body signal sensing unit 17 of the sensor module 1 sense the traveling information S1 of the bicycle 3 and the user's body signals S2, respectively, the microprocessor 11 will retrieve the traveling information S1 and the body signals S2 from the sensing unit 12 and the body signal sensing unit 17, respectively, and send the retrieved traveling information S1 and body signals S2 to the display unit 13 for displaying. The display unit 13 can display the traveling information S1, including speed information, distance information, and time information, and/or the user's body signals, including body temperature signal and calorie consumption signal, under the operation by the user U.

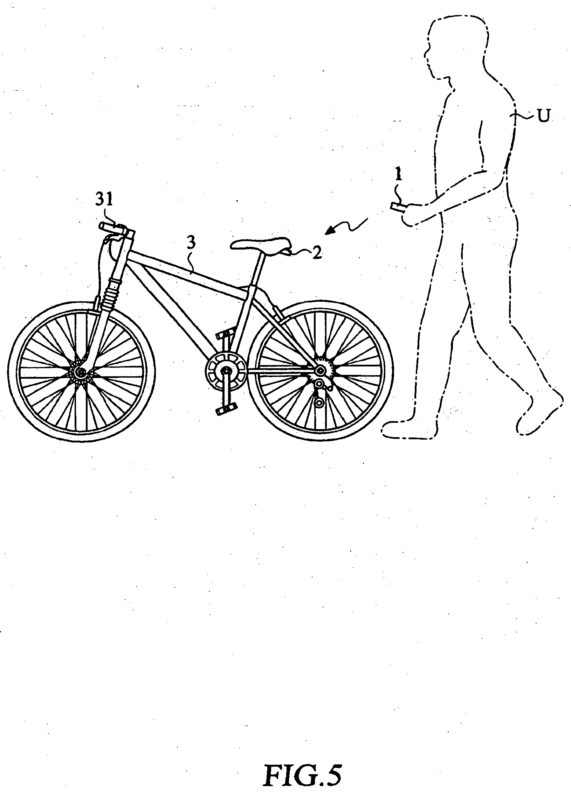

Fig. 5 schematically shows a second example of application of the bicycle meter assembly 100 according to the first embodiment of the present invention. When the user U has parked the bicycle 3 at a selected spot, the user U can remove the sensor module 1 from the handlebar of the bicycle 3 and carry the sensor module 1 along with him or her. When the user U returns and wants to locate his or her bicycle 3, he or she can approach the selected spot and press the bicycle positioning button 141 of the keypad 14 on the sensor module 1 at a preset distance from the bicycle 3. At this point, as shown in Figs. 2 and 5, the keypad 14 being pressed by the user U generates a call signal S3, which is transmitted by the microprocessor 11 to the encoder 15 and encoded. The encoded call signal is sent to the wireless transceiver 16 via the microprocessor 11, and then transmitted by the wireless transceiver 16 to the receiver module 2.

When the receiver 21 of the receiver module 2 receives the encoded call signal from the sensor module 1, the decoder 22 of the receiver module 2 decodes the received call signal into a trigger signal S4, which triggers the warning unit 23 to emit a warning signal, such as a buzz emitted by a buzzer or a flashing light emitted by an indicator lamp. In this manner, the user U can quickly locate his or her bicycle 3.

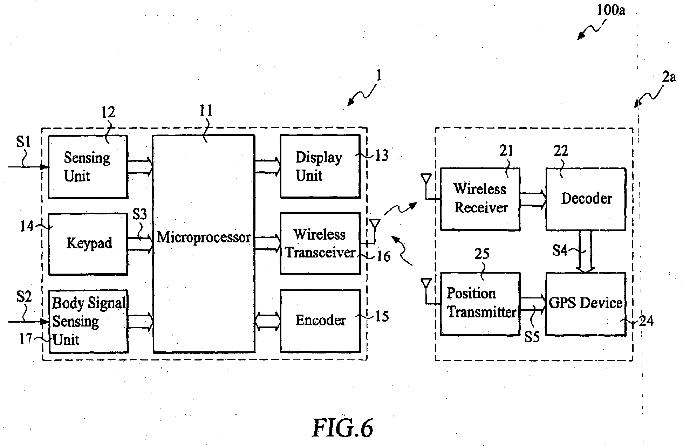

Fig. 6 is a block diagram showing the internal circuit design for the sensor module 1 and the receiver module 2a of a bicycle meter assembly 100a according to a second embodiment of the present invention. Since the bicycle meter assembly 100a in the second embodiment is generally structurally and functionally similar to the first embodiment, components that are the same in the two embodiments are denoted by the same reference numerals. The second embodiment is different from the first embodiment in that a global positioning system (GPS) device 24 and a position transmitter 25 are provided in the receiver module 2.

In the second embodiment, when the receiver module 2a receives a call signal S4 transmitted by the sensor module 1, the decoder 22 of the receiver module 2a decodes the call signal and the decoded call signal is sent to the GPS device 24. At this point, the GPS device 24 will receive positional coordinate information S5, which is then transmitted to the sensor module 1 via the position transmitter 25. When the sensor module 1 receives the positional coordinate information S5, the microprocessor 11 will send the received positional coordinate information S5 to the display unit 13 for displaying.

A further embodiment is set out in claims 4 and 5.

## Claims

1. A bicycle meter assembly (100) for mounting on a bicycle, comprising:
a sensor module (1) including:
a microprocessor (11);
a sensing unit (12) electrically connected to the microprocessor (11) and adapted to sense a set of traveling information (S1) from the bicycle (3) being ridden, the traveling information (S1) including time information, speed information, and distance information;
a display unit (13) electrically connected to the microprocessor (11) and adapted to display the set of traveling information (S1) sensed by the sensing unit (12);
a keypad (14) including at least a bicycle positioning button (141) adapted to generate a call signal (S3) when the bicycle positioning button (141) is pressed by a user;
an encoder (15) electrically connected to the microprocessor (11) and adapted to encode the call signal (S3);
a wireless transceiver (16) electrically connected to the microprocessor (11) and adapted to transmit the call signal (S3) having been encoded by the encoder (15);
a body signal sensing unit (17) adapted to sense a set of body signals (S2) from a user riding the bicycle (3); and
a receiver module (2) including:
a wireless receiver (21) adapted to receive the call signal (S3) transmitted by the wireless transceiver (16) of the sensor module (1);
a decoder (22) electrically connected to the wireless receiver (21) and adapted to decode the call signal (S3) received by the wireless receiver (21) to generate a trigger signal (S4); and
a warning unit (23) electrically connected to the wireless receiver (21) and adapted to be triggered by the trigger signal (S4) to emit a warning signal;
**characterised in that** the body signals (S2) include at least one of a body temperature signal and a calorie consumption signal, and the sensor module is adapted to be removed from the bicycle and carried by the user.

2. The bicycle meter assembly as claimed in claim 1, **characterized in that** the warning unit (23) of the receiver module (2) is an indicator lamp.

3. The bicycle meter assembly as claimed in claim 1, **characterized in that** the warning unit (23) of the receiver module (2) is a buzzer.

4. The bicycle meter assembly with locating function as claimed in claim 1, **characterized in that** the receiver module (2a) further includes a GPS device (24) for receiving positional coordinate information.

5. The bicycle meter assembly with locating function as claimed in claim 4, **characterized in that** the receiver module (2a) further includes a position transmitter (25) for transmitting the positional coordinate information to the sensor module (1).

6. A method comprising the steps of:
mounting a bicycle meter assembly (100) on a bicycle (3), bicycle meter assembly comprising:
a sensor module (1) including:
a microprocessor (11);
a sensing unit (12) electrically connected to the microprocessor (11) and adapted to sense a set of traveling information (S1) from the bicycle (3) being ridden, the traveling information (S1) including time information, speed information, and distance information;
a display unit (13) electrically connected to the microprocessor (11) and adapted to display the set of traveling information (S1) sensed by the sensing unit (12);
a keypad (14) including at least a bicycle positioning button (141) adapted to generate a call signal (S3) when the bicycle positioning button (141) is pressed by a user;
an encoder (15) electrically connected to the microprocessor (11) and adapted to encode the call signal (S3); and
a wireless transceiver (16) electrically connected to the microprocessor (11) and adapted to transmit the call signal (S3) having been encoded by the encoder (15);
a body signal sensing unit (17) adapted to sense a set of body signals (S2) from a user riding the bicycle (3); and
a receiver module (2) including:
a wireless receiver (21) adapted to receive the call signal (S3) transmitted by the wireless transceiver (16) of the sensor module (1);
a decoder (22) electrically connected to the wireless receiver (21) and adapted to decode the call signal (S3) received by the wireless receiver (21) to generate a trigger signal (S4); and
a warning unit (23) electrically connected to the wireless receiver (21) and adapted to be triggered by the trigger signal (S4) to emit a warning signal;
**characterised in that** the body signals (S2) include at least one of a body temperature signal and a calorie consumption signal, and by:
parking the bicycle (3), removing the sensor module (1) from the bicycle and carrying it away;
using the bicycle positioning button (141) to generate the call signal (S3) ;
encoding, transmitting, receiving and decoding the call signal to generate the trigger signal (S4); and
in response to the trigger signal (S4), emitting the warning signal from the warning unit (23) so as to locate the parked bicycle.

## Patentansprüche

1. Fahrradcomputeranordnung (100) zum Befestigen an einem Fahrrad, umfassend:
ein Sensormodul (1), aufweisend:
einen Mikroprozessor (11);
eine Erfassungseinheit (12), die elektrisch an den Mikroprozessor (11) angeschlossen und so ausgelegt ist, dass sie einen Satz von Fahrinformationen (S1) von dem Fahrrad (3), das gefahren wird, erfasst, wobei die Fahrinformationen (S1) Zeitangaben, Geschwindigkeitsangaben und Entfernungsangaben umfassen;
eine Anzeigeeinheit (13), die elektrisch an den Mikroprozessor (11) angeschlossen und so ausgelegt ist, dass sie den Satz von Fahrinformationen (S1), die die Erfassungseinheit (12) erfasst hat, anzeigt;
ein Tastenfeld (14), das mindestens einen Fahrrad-Standortbestimmungsknopf (141) aufweist, der so ausgelegt ist, dass er ein Rufsignal (S3) erzeugt, wenn der Fahrrad-Standortbestimmungsknopf (141) von einem Benutzer gedrückt wird;
einen Kodierer (15), der elektrisch an den Mikroprozessor (11) angeschlossen und so ausgelegt ist, dass er das Rufsignal (S3) kodiert;
ein drahtloser Transceiver (16), der elektrisch an den Mikroprozessor (11) angeschlossen und so ausgelegt ist, dass er das Rufsignal (S3) überträgt, das von dem Kodierer (15) kodiert wurde;
eine Körpersignal-Erfassungseinheit (17), die so ausgelegt ist, dass sie eine Reihe von Körpersignalen (S2) von einem Benutzer erfasst, der das Fahrrad (3) fährt; und
ein Empfängermodul (2), aufweisend:
einen Drahtlosempfänger (21), der so ausgelegt ist, dass er das Rufsignal (S3), das von dem drahtlosen Transceiver (16) des Sensormoduls (1) übertragen wird, empfängt;
einen Dekodierer (22), der elektrisch an den Drahtlosempfänger (21) angeschlossen und so ausgelegt ist, dass er das Rufsignal (S3) dekodiert, das der Drahtlosempfänger (21) empfangen hat, damit er ein Auslösesignal (S4) erzeugt; und
eine Warneinheit (23), die elektrisch an den Drahtlosempfänger (21) angeschlossen und so ausgelegt ist, dass sie von dem Auslösesignal (S4) so angesteuert wird, dass sie ein Warnsignal abgibt;
**dadurch gekennzeichnet, dass** die Körpersignale (S2) ein Körpertemperatursignal und/oder ein Kalorienverbrauchssignal umfassen,
und das Sensormodul so ausgelegt ist, dass es von dem Benutzer vom Fahrrad abgenommen und mitgenommen wird.

2. Fahrradcomputeranordnung nach Anspruch 1, **dadurch gekennzeichnet, dass** die Warneinheit (23) des Empfängermoduls (2) eine Anzeigelampe ist.

3. Fahrradcomputeranordnung nach Anspruch 1, **dadurch gekennzeichnet, dass** die Warneinheit (23) des Empfängermoduls (2) ein Summer ist.

4. Fahrradcomputeranordnung mit Ortungsfunktion nach Anspruch 1, **dadurch gekennzeichnet, dass** das Empfängermodul (2a) ferner eine GPS-Vorrichtung (24) zum Empfangen von Positionskoordinatenangaben aufweist.

5. Fahrradcomputeranordnung mit Ortungsfunktion nach Anspruch 4, **dadurch gekennzeichnet, dass** das Empfängermodul (2a) ferner einen Positionssender (25) zum Übertragen der Positionskoordinatenangaben an das Sensormodul (1) aufweist.

6. Verfahren, umfassend folgende Schritte:
Befestigen einer Fahrradcomputeranordnung (100) an einem Fahrrad (3), wobei die Fahrradcomputeranordnung Folgendes umfasst:
ein Sensormodul (1), aufweisend:
einen Mikroprozessor (11);
eine Erfassungseinheit (12), die elektrisch an den Mikroprozessor (11) angeschlossen und so ausgelegt ist, dass sie einen Satz von Fahrinformationen (S1) von dem Fahrrad (3), das gefahren wird, erfasst, wobei die Fahrinformationen (S1) Zeitangaben, Geschwindigkeitsangaben und Entfernungsangaben umfassen;
eine Anzeigeeinheit (13), die elektrisch an den Mikroprozessor (11) angeschlossen und so ausgelegt ist, dass sie den Satz von Fahrinformationen (S1), die die Erfassungseinheit (12) erfasst hat, anzeigt;
ein Tastenfeld (14), das mindestens einen Fahrrad-Standortbestimmungsknopf (141) aufweist, der so ausgelegt ist, dass er ein Rufsignal (S3) erzeugt, wenn der Fahrrad-Standortbestimmungsknopf (141) von einem Benutzer gedrückt wird;
einen Kodierer (15), der elektrisch an den Mikroprozessor (11) angeschlossen und so ausgelegt ist, dass er das Rufsignal (S3) kodiert; und
ein drahtloser Transceiver (16), der elektrisch an den Mikroprozessor (11) angeschlossen und so ausgelegt ist, dass er das Rufsignal (S3) überträgt, das von dem Kodierer (15) kodiert wurde;
eine Körpersignal-Erfassungseinheit (17), die so ausgelegt ist, dass sie eine Reihe von Körpersignalen (S2) von einem Benutzer erfasst, der das Fahrrad (3) fährt; und
ein Empfängermodul (2), aufweisend:
einen Drahtlosempfänger (21), der so ausgelegt ist, dass er das Rufsignal (S3), das von dem drahtlosen Transceiver (16) des Sensormoduls (1) übertragen wird, empfängt;
einen Dekodierer (22), der elektrisch an den Drahtlosempfänger (21) angeschlossen und so ausgelegt ist, dass er das Rufsignal (S3) dekodiert, das der Drahtlosempfänger (21) empfangen hat, damit er ein Auslösesignal (S4) erzeugt; und
eine Warneinheit (23), die elektrisch an den Drahtlosempfänger (21) angeschlossen und so ausgelegt ist, dass sie von dem Auslösesignal (S4) so angesteuert wird, dass sie ein Warnsignal abgibt;
**dadurch gekennzeichnet, dass** die Körpersignale (S2) ein Körpertemperatursignal und/oder ein Kalorienverbrauchssignal umfassen, und durch:
Abstellen des Fahrrads (3), Abnehmen des Sensormoduls (1) von dem Fahrrad und Mitnehmen desselben;
Verwenden des Fahrrad-Standortbestimmungsknopfs (141) zum Erzeugen des Rufsignals (S3);
Kodieren, Übermitteln, Empfangen und Dekodieren des Rufsignals zum Erzeugen des Auslösesignals (S4); und
als Reaktion auf das Auslösesignal (S4) Aussenden des Warnsignals von der Warneinheit (23) zum Orten des abgestellten Fahrrads.

## Revendications

1. Ensemble compteur de bicyclette (100) destiné à être monté sur une bicyclette, comprenant :
un module de capteur (1) comprenant :
un microprocesseur (11) ;
une unité de détection (12) connectée électriquement au microprocesseur (11) et agencée pour détecter un ensemble d'informations de déplacement (S1) à partir de la bicyclette (3) qui est conduite, les informations de déplacement (S1) comprenant des informations de temps, des informations de vitesse et des informations de distance ;
une unité d'affichage (13) connectée électriquement au microprocesseur (11) et agencée pour afficher l'ensemble d'informations de déplacement (S1) détecté par l'unité de détection (12) ;
un clavier (14) comprenant au moins un bouton de positionnement de bicyclette (141) agencé pour générer un signal d'appel (S3) lorsque le bouton de positionnement de bicyclette (141) est enfoncé par un utilisateur ;
un codeur (15) connecté électriquement au microprocesseur (11) et agencé pour coder le signal d'appel (S3) ;
un émetteur-récepteur sans fil (16) connecté électriquement au microprocesseur (11) et agencé pour émettre le signal d'appel (S3) qui a été codé par le codeur (15) ;
une unité de détection de signal de corps (17) agencée pour détecter un ensemble de signaux de corps (S2) à partir d'un utilisateur conduisant la bicyclette (3) ; et
un module de récepteur (2) comprenant :
un récepteur sans fil (21) agencé pour recevoir le signal d'appel (S3) émis par l'émetteur-récepteur sans fil (16) du module de capteur (1) ;
un décodeur (22) connecté électriquement au récepteur sans fil (21) et agencé pour décoder le signal d'appel (S3) reçu par le récepteur sans fil (21) pour générer un signal de déclenchement (S4) ; et
une unité d'avertissement (23) connectée électriquement au récepteur sans fil (21) et agencée pour être déclenchée par le signal de déclenchement (S4) pour émettre un signal d'avertissement ;
**caractérisé par le fait que** les signaux de corps (S2) comprennent au moins l'un d'un signal de température corporelle et d'un signal de consommation de calories,
et le module de capteur est agencé pour être retiré de la bicyclette et porté par l'utilisateur.

2. Ensemble compteur de bicyclette selon la revendication 1, **caractérisé par le fait que** l'unité d'avertissement (23) du module de récepteur (2) est un voyant.

3. Ensemble compteur de bicyclette selon la revendication 1, **caractérisé par le fait que** l'unité d'avertissement (23) du module de récepteur (2) est un avertisseur sonore.

4. Ensemble compteur de bicyclette ayant une fonction de positionnement selon la revendication 1, **caractérisé par le fait que** le module de récepteur (2a) comprend en outre un dispositif GPS (24) pour recevoir des informations de coordonnées de position.

5. Ensemble compteur de bicyclette ayant une fonction de positionnement selon la revendication 4, **caractérisé par le fait que** le module de récepteur (2a) comprend en outre un émetteur de position (25) pour émettre les informations de coordonnées de position au module de capteur (1).

6. Procédé comprenant les étapes consistant à :
monter un ensemble compteur de bicyclette (100) sur une bicyclette (3), l'ensemble compteur de bicyclette comprenant :
un module de capteur (1) comprenant :
un microprocesseur (11) ;
une unité de détection (12) connectée électriquement au microprocesseur (11) et agencée pour détecter un ensemble d'informations de déplacement (S1) à partir de la bicyclette (3) qui est conduite, les informations de déplacement (S1) comprenant des informations de temps, des informations de vitesse et des informations de distance ;
une unité d'affichage (13) connectée électriquement au microprocesseur (11) et agencée pour afficher l'ensemble d'informations de déplacement (S1) détecté par l'unité de détection (12) ;
un clavier (14) comprenant au moins un bouton de positionnement de bicyclette (141) agencé pour générer un signal d'appel (S3) lorsque le bouton de positionnement de bicyclette (141) est enfoncé par un utilisateur ;
un codeur (15) connecté électriquement au microprocesseur (11) et agencé pour coder le signal d'appel (S3) ;
un émetteur-récepteur sans fil (16) connecté électriquement au microprocesseur (11) et agencé pour émettre le signal d'appel (S3) qui a été codé par le codeur (15) ;
une unité de détection de signal de corps (17) agencée pour détecter un ensemble de signaux de corps (S2) à partir d'un utilisateur conduisant la bicyclette (3) ; et
un module de récepteur (2) comprenant :
un récepteur sans fil (21) agencé pour recevoir le signal d'appel (S3) émis par l'émetteur-récepteur sans fil (16) du module de capteur (1) ;
un décodeur (22) connecté électriquement au récepteur sans fil (21) et agencé pour décoder le signal d'appel (S3) reçu par le récepteur sans fil (21) pour générer un signal de déclenchement (S4) ; et
une unité d'avertissement (23) connectée électriquement au récepteur sans fil (21) et agencée pour être déclenchée par le signal de déclenchement (S4) pour émettre un signal d'avertissement ;
**caractérisé par le fait que** les signaux de corps (S2) comprennent au moins l'un d'un signal de température corporelle et d'un signal de consommation de calories, et par :
stationner la bicyclette (3), retirer le module de capteur (1) de la bicyclette et l'emporter ;
utiliser le bouton de positionnement de bicyclette (141) pour générer le signal d'appel (S3) ;
coder, émettre, recevoir et décoder le signal d'appel pour générer le signal de déclenchement (S4) ; et
en réponse au signal de déclenchement (S4), émettre le signal d'avertissement à partir de l'unité d'avertissement (23) de façon à localiser la bicyclette stationnée.
